# EUROPÄISCHE PATENTANMELDUNG

(11) **EP 2 540 606 A1**
(43) Veröffentlichungstag der Anmeldung: **02.01.2013**
(21) Anmeldenummer: 12173750.6
(22) Anmeldetag: 27.06.2012
(51) Int. Cl.: B62K 19/36, B62J 1/08

(54) **Vorrichtung zur Einstellung wenigstens einer Fahrzeugfunktion eines Zweiradfahrzeugs**

(30) Priorität: 30.06.2011 DE 202011102651 U; 08.07.2011 DE 202011103073 U; 08.09.2011 DE 102011113309
(71) Anmelder: Bankwitz, Fritz U., 73230 Kirchheim/Teck (DE)
(72) Erfinder: Bankwitz, Fritz U., 73230 Kirchheim/Teck (DE)

(57) **Zusammenfassung**

Die erfindungsgemäße Vorrichtung dient zur Einstellung wenigstens einer Fahrzeugfunktion eines Zweiradfahrzeugs. Die Vorrichtung umfasst eine Geschwindigkeitsmesseinrichtung (3), mittels derer die Geschwindigkeit des Zweiradfahrzeugs erfasst wird, und eine Stelleinheit, mittels derer in Abhängigkeit der Geschwindigkeit des Zweiradfahrzeugs die Stellung eines Sitzes des Zweiradfahrzeugs selbsttätig eingestellt wird.

## Beschreibung

Die Erfindung betrifft eine Vorrichtung zur Einstellung wenigstens einer Fahrzeugfunktion eines Zweiradfahrzeugs.

Zweiradfahrzeuge der in Rede stehenden Art können insbesondere als Fahrräder ausgebildet sein. Bei derartigen Fahrrädern ist in bekannter Weise ein höhenverstellbarer Sitz in Form eines Sattels vorgesehen. Der Fahrer passt dabei einmalig die Sitzhöhe des Sattels an seine Körpergröße an, die dann fest eingestellt ist, das heißt für alle folgende Fahrten beibehalten wird.

Üblicherweise stellt der Fahrer den Sattel so ein, dass ein bequemes Fahren des Fahrrads ermöglicht ist. Bei einer solchen Satteleinstellung tritt jedoch bei Anhalten das Problem auf, dass der Fahrer auf dem Sattel sitzend mit den Füßen nicht auf den Boden gelangt. Daher muss der Fahrer bei Anhalten das Fahrrad schräg stellen und aus dem Sattel steigen.

Im Normalfall ist ein solcher Anhaltevorgang unproblematisch. In beengten Situationen, beispielsweise im Bereich von Ampeln, wenn Kraftfahrzeuge in geringem Abstand des Zweiradfahrzeugs passieren, kann ein Schrägstellen des Zweiradfahrzeugs beim Anhaltevorgang zu gefährlichen Situationen führen, insbesondere dann wenn ältere Personen das Zweiradfahrzeug nutzen, deren Beweglichkeit und Reaktionsvermögen gegebenenfalls eingeschränkt ist.

Aus der DE 101 10 887 A1 und der DE 20 2006 010 280 U1 sind Höhenverstelleinrichtungen bekannt, mittels derer der Fahrer die Höhenposition des Sattels seines Fahrrads während der Fahrt einstellen kann. Hierzu kann der Fahrer am Lenkrad des Fahrrads einen Hebel betätigen, worauf ein Mechanismus aktiviert wird, mittels dessen die Höhe des Sattels geändert wird.

Ein Vorteil derartiger Vorrichtungen besteht darin, dass ein Fahrer eines Fahrrads noch während der Fahrt kurz vor einem gewünschten Anhalten durch Betätigen des Hebels die Sitzhöhe des Sattels so verstellen kann, dass bei einem Anhalten der Sattel so positioniert ist, dass der Fahrer im Sattel sitzend mit den Füßen zum Boden gelangt und damit der Fahrer bei einem Anhalten das Fahrrad nicht schrägstellen muss und auch nicht aus dem Sattel steigen muss.

Nachteilig hierbei ist jedoch, dass mit dem Hebel zur Sitzverstellung der Fahrer neben Elementen wie der Gangschaltung und der Bremse des Fahrrads ein weiteres Element betätigen muss. In kritischen Betriebssituationen, insbesondere bei einem schnellen, unvorhersehbaren Anhalten im Straßenverkehr, ist eine praktisch gleichzeitige Bedienung all dieser Elemente gefordert, was selbst für geübte Radfahrer nur sehr schwer durchführbar ist. Dies kann dann zu einem unkontrollierten Anhalten, verbunden mit einem Abspringen des Radfahrers vom Sattel führen, wodurch sich Gefahrensituationen ergeben können.

Der Erfindung liegt die Aufgabe zugrunde, eine Vorrichtung bereitzustellen, mittels derer die Funktionalität und gleichzeitig auch die Betriebssicherheit eines Zweiradfahrers erhöht wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung dient zur Einstellung wenigstens einer Fahrzeugfunktion eines Zweiradfahrzeugs. Die Vorrichtung umfasst eine Geschwindigkeitsmesseinrichtung, mittels derer die Geschwindigkeit des Zweiradfahrzeugs erfasst wird, und eine Stelleinheit, mittels derer in Abhängigkeit der Geschwindigkeit des Zweiradfahrzeugs die Stellung eines Sitzes des Zweiradfahrzeugs selbsttätig eingestellt wird.

Mit der erfindungsgemäßen Vorrichtung kann während der Fahrt die Stellung des Sitzes des Zweiradfahrzeugs, vorzugsweise dessen Sitzhöhe verstellt werden, wodurch die Funktionalität des Zweiradfahrzeugs erhöht wird. Ein wesentlicher Vorteil der erfindungsgemäßen Vorrichtung besteht darin, dass diese Sitzhöhenverstellung selbsttätig in Abhängigkeit der Geschwindigkeit erfolgt, so dass der Fahrer des Fahrzeugs hierzu selbst keinerlei Bedienvorgänge durchführen muss. Dadurch wird nicht nur der Bedienkomfort des Zweiradfahrzeugs. Vielmehr ergibt sich dadurch eine erhöhte Betriebssicherheit, da der Fahrer von unnötigen Einstellvorgängen entlastet wird. Die Bedienvorgänge sind somit auf die wesentlichen Fahrfunktionen begrenzt, so dass auch in un-übersichtlichen Verkehrssituationen der Fahrer das Zweiradfahrzeug einfach und damit sicher bedienen kann.

Die erfindungsgemäße Vorrichtung kann für Zweiradfahrzeuge aller Art, besonders vorteilhaft für Fahrräder mit oder ohne Hilfsmotor eingesetzt werden.

Gemäß einer vorteilhaften Ausgestaltung der Erfindung wird bei Absinken der Geschwindigkeit des Zweiradfahrzeugs unter einen Schwellwert der Sitz mittels der Stelleinheit in eine Ruheposition überführt. Dabei ist vorteilhaft die Sitzhöhe des Sitzes in der Ruheposition kleiner als in einer Fahrposition, die bei Geschwindigkeiten oberhalb des Schwellwerts mittels der Stelleinheit eingestellt ist.

Mit dieser Ausführungsform wird eine weitere wesentliche Komfort- und Sicherheitsfunktion für das Zweiradfahrzeug bereit gestellt. Durch die Schwellwertbewertung der mit der Geschwindigkeitsmesseinrichtung erfassten Geschwindigkeit wird eine Sitzhöhenverstellung dann eingeleitet, wenn der Fahrer des Zweiradfahrzeugs einen Anhaltevorgang einleitet und hierzu die Geschwindigkeit des Zweiradfahrzeugs reduziert. Der Schwellwert und die Durchführung der Sitzverstellung sind so angepasst, dass vor dem Anhalten des Zweiradfahrzeugs die Einstellung des Sitzes in das Ruheposition abgeschlossen ist. In der Ruheposition ist der Sitz insbesondere in seiner Höhe so eingestellt, dass der Fahrer während des Anhaltens im Sitz sitzend mit den Füßen den Boden erreicht und damit das Zweiradfahrzeug ohne Schrägstellung halten kann. Damit werden insbesondere Gefahrensituationen in unübersichtlichen, beengten Verkehrssituationen oder bei einem erforderlichen plötzlichen Anhalten des Zweiradfahrzeugs vermieden.

Umgekehrt geht bei Anfahren des Zweiradfahrzeugs der Sitz selbsttätig aus der Ruheposition in eine Fahrposition über, wenn die Geschwindigkeit des Zweiradfahrzeugs den Schwellwert überschreitet. Auch dies stellt eine wesentliche Steigerung des Bedienkomforts dar, da der Fahrer hierzu keinerlei Bedienvorgänge durchführen muss. Alternativ hierzu kann eine vom Fahrer auszulösende Verstellmöglichkeit vorgesehen sein.

Gemäß einer vorteilhaften Weiterbildung der Erfindung sind durch mehrere Schwellwerte mehrere Geschwindigkeitsbereiche definiert, wobei für jeden Geschwindigkeitsbereich mit der Stelleinheit eine bestimmte Stellung des Sitzes eingestellt wird.

Damit wird die Funktion der erfindungsgemäßen Vorrichtung dahingehend erweitert, dass in verschiedenen Geschwindigkeitsbereichen selbsttätig unterschiedliche Sitzstellungen insbesondere Sitzhöhen, eingestellt werden. So kann beispielsweise bei sehr hohen Geschwindigkeiten selbsttätig eine Sitzposition eingestellt werden, die ein sehr sportliches Fahren fördert, während bei geringeren Geschwindigkeiten eine Sitzposition für ein bequemeres Fahren eingestellt wird. Zusätzlich kann analog zur vorigen Ausführungsform zur Vorbereitung eines Anhaltevorgangs dann, wenn die Geschwindigkeit den kleinsten Schwellwert unterschreitet, der Sitz in eine Ruheposition eingefahren werden.

Gemäß einer besonders vorteilhaften Ausführungsform der Erfindung weist die Stelleinheit eine elektronische Steuereinheit mit einer Rechnereinheit und ein Betätigungselement auf, wobei in der Rechnereinheit die mit der Geschwindigkeitsmesseinrichtung erfasste Geschwindigkeit mit wenigstens einem Schwellwert verglichen wird und die Steuereinheit in Abhängigkeit hiervon das Betätigungselement ansteuert. Mittels dessen wird die Stellung des Sitzes geändert.

Dabei weist die Steuereinheit eine Anzeigeeigeneinheit zur Anzeige eines Schwellwerts und eine Eingabeeinheit zur Vorgabe oder Änderung eines Schwellwerts auf.

Ein wesentlicher Vorteil dieser Ausführungsform besteht darin, dass der oder die Schwellwerte zur Bewertung der Signale der Geschwindigkeitsmesseinrichtung in der Steuereinheit als programmierbare Parameter vorgegeben sind, die jederzeit zur Anpassung an unterschiedliche Applikationsbedingungen geändert werden können. Damit kann die erfindungsgemäße Sitzverstellung optimal an die jeweiligen Einsatzbedingungen angepasst werden.

Die Rechnereinheit der Steuereinheit kann dabei von einem Mikroprozessor gebildet sein. Die Anzeigeeinheit kann im einfachsten Fall von einer oder mehreren Leuchtdioden gebildet sein. Die Eingabeeinheit kann von einem oder mehreren Tasten gebildet sein. Die so ausgebildete Sensoreinheit weist bei geringen Herstellkosten eine kompakte Bauform auf und kann so einfach und platzsparend am Zweiradfahrzeug angebaut sein.

Weiterhin ist vorteilhaft, dass an die Steuereinheit ohne großen konstruktiven Aufwand eine Geschwindigkeitsmesseinrichtung angeschlossen werden kann, die elektrische Geschwindigkeitssignale an die Steuereinheit überträgt. Beispiele hierfür sind Tachometer oder sonstige Geschwindigkeitssensoren.

Schließlich ist vorteilhaft, dass mit der Steuereinheit ohne großen konstruktiven Aufwand ein Betätigungselement, mit dem die Position, insbesondere die Höhe des Sitzes verstellt wird, angesteuert werden kann.

Besonders vorteilhaft weist die Stelleinheit als Betätigungselement einen Gasdruckzylinder, einen Pneumatikzylinder, einen Hydraulikzylinder oder einen Elektromotor auf.

Für den Fall, dass das Betätigungselement von einem Gasdruckzylinder, einem Hydraulikzylinder oder einem Pneumatikzylinder gebildet ist, wird mit der Steuereinheit ein Stellelement wie ein Schalter, insbesondere Steuerschieber, oder ein Hebel betätigt, wodurch das jeweilige Betätigungselement aktiviert wird und durch Ein- oder Ausfahren eine Höhenverstellung des Sitzes bewirkt. Ist das Betätigungselement von einem Elektromotor gebildet, kann dieser direkt von der Steuereinheit angesteuert werden. Durch den Elektromotor wird dann beispielsweise eine Schubstange bewegt, um so den Sitz anzuheben oder abzuheben. Alternativ oder zusätzlich zu einer Höhenverstellung kann auch eine Neigungsverstellung des Sitzes durchgeführt werden, wobei hierzu eine geeignete mechanische Umsetzung vorgesehen ist, die aus der Hub- und Senkbewegung des Betätigungselements eine Schwenkbewegung des Sitzes generiert.

Die Signalübertragung zwischen der Steuereinheit und dem Betätigungselement sowie gegebenenfalls der Geschwindigkeitsmesseinrichtung kann allgemein leitungsgebunden, das heißt über Kabelverbindungen, oder berührungslos, beispielsweise über Funksignale erfolgen.

Besonders vorteilhaft weisen die elektrischen Komponenten der erfindungsgemäßen Vorrichtung eine autarke Energieversorgung wie einen Akkumulator auf. Bei einem als Fahrrad ausgebildeten Zweiradfahrzeug kann die zum Antrieb dienende Tretkurbel auch zur Stromerzeugung genutzt werden.

Gemäß einer vorteilhaften, alternativen Ausgestaltung der Erfindung sind die Geschwindigkeitsmesseinrichtungen und die Stelleinheiten in Form von mechanisch arbeitenden Einheiten ausgebildet.

Die Geschwindigkeitsmesseinrichtung kann in diesem Fall von einer Fliehkraftkupplung gebildet sein. Der Schwellwert für die Geschwindigkeit ist durch den Ansprechpunkt der Fliehkraftkupplung, bei welchem zwei Kupplungsscheiben auseinander geführt werden, definiert. Dies bedeutet, dass die Fliehkraftkupplung ein schwellwertbasiertes, binäres Geschwindigkeitssignal generiert, das über ein Stellelement wie einem Bowdenzug einem Betätigungselement wie einem Gasdruckzylinder zum Heben oder Senken des Sitzes zugeführt wird. Ein derartiges mechanisches System weist einen besonders robusten Aufbau auf.

Die erfindungsgemäße Vorrichtung kann generell integraler Bestandteil des jeweiligen Zweiradfahrzeugs sein. Alternativ kann die erfindungsgemäße Vorrichtung eine nachrüstbare Einheit bilden.

Gemäß einer vorteilhaften Weiterbildung kann mit der erfindungsgemäßen Vorrichtung zusätzlich eine Gangschaltung und/oder ein Antriebsmotor des Zweiradfahrzeugs insbesondere des Hilfsmotors eines Fahrrads betätigt werden.

Dadurch wird eine weitere Automatisierung des Zweiradfahrzeugs erhalten und der Fahrer von aufwändigen Bedingungen von Bedienelementen weiter entlastet.

Besonders vorteilhaft werden diese zusätzlichen Einstellmöglichkeiten dazu genutzt, bereits vor Anhalten des Zweiradfahrzeugs, insbesondere des Fahrrads einen geeigneten Betriebszustand für das folgende Anhalten und/oder das anschließende Anfahren des Zweiradfahrzeugs selbsttätig zu generieren.

Hierzu wird zusätzlich zu der erfindungsgemäßen Sitzverstellung bei Absinken der Geschwindigkeit des Zweiradfahrzeugs unterhalb eines Schwellwerts ein für einen Anfahrvorgang geeigneter Gang eingelegt und/oder der Antriebsmotor abgeschaltet.

Wenn dann der Fahrer das Zweiradfahrzeug, insbesondere das Fahrrad angehalten hat, ist bereits ein Betriebszustand erreicht, der dem Fahrer des Fahrrads ein bequemes Halten des Fahrrads ermöglicht, da der Fahrer durch den abgesenkten Sitz auf diesem sitzend mit den Füßen auf dem Boden gelangt. Durch das selbsttätige Ausschalten des Hilfsmotors des Fahrrads vor Erreichen der Halteposition ist gewährleistet, dass dieser bei Anhalten des Fahrrads sicher abgeschaltet ist, wodurch ein unkontrolliertes Ausfahren aus der Halteposition vermieden wird. Durch das selbsttätige Einlegen eines für ein Anfahren geeigneten Ganges vor dem Anhalten des Fahrrads ist gewährleistet, dass der Fahrer nach Beenden des Halts bequem und ohne ein Durchführen von Schaltvorgängen anfahren kann.

Zur selbsttätigen Einstellung der Gangschaltung und des Hilfsmotors können weitere Stelleinheiten mit Betätigungselementen vorgesehen sein, welche bevorzugt von der Steuereinheit gesteuert werden. Beispielsweise können zur selbsttätigen Betätigung der Gangschaltung Elemente wie ein Bowdenzug und ein zugeordneter Hebel vorgesehen sein. Die Ansteuerung des Hilfsmotors kann vorteilhaft direkt über elektrische Steuersignale, die in der Steuereinheit generiert werden, erfolgen.

Die Erfindung wird im Folgenden anhand der Zeichnungen erläutert. Es zeigen:
- Figur 1:: Schematische Darstellung eines Fahrrads mit der erfindungsgemäßen Vorrichtung.
- Figur 2:: Querschnittsdarstellung der Vorrichtung gemäß Figur 1.
- Figur 3:: Längsdarstellung der Vorrichtung gemäß Figur 1.

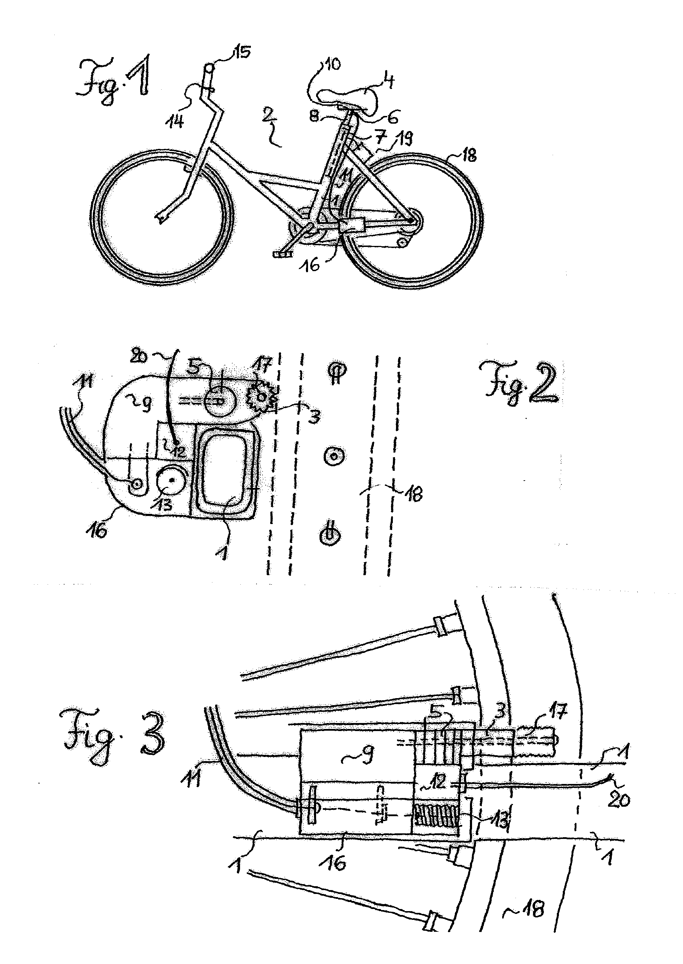

Figur 1 zeigt schematisch ein Ausführungsbeispiel eines mit der erfindungsgemäßen Vorrichtung. Die Figuren 2 und 3 zeigen Detaildarstellungen dieser Vorrichtung.

Figur 1 zeigt ein am Rahmen 1 eines Fahrrads 2 befestigtes Gehäuse 16 der erfindungsgemäßen Vorrichtung. Das Gehäuse 16 kann an unterschiedlichen Positionen des Rahmens 1 befestigt werden.

Die erfindungsgemäße Vorrichtung dient zur selbsttätigen Einstellung der Höhe eines als Sattels 4 ausgebildeten Sitzes des Fahrrads 2. Die Höheneinstellung erfolgt in Abhängigkeit der Geschwindigkeit des Fahrrads 2, welche mit einer Geschwindigkeitsmesseinrichtung 3 erfasst wird. Im vorliegenden Fall ist als Erfassungselement eine Rolle 17 vorgesehen, die in schlüssigem Kontakt mit einem Rad 18 des Fahrrads 2 ist. Durch die Drehbewegung des Rads 18 wird die Rolle 17 mit gedreht und erzeugt so ein geschwindigkeitsproportionales Signal, vorzugsweise in Form eines elektrischen Signals, das einer Steuereinheit 5 zugeführt wird.

Die Steuereinheit 5 weist eine Rechnereinheit auf sowie optional eine Eingabeeinheit und eine Anzeigeeinheit. In der Rechnereinheit der Steuereinheit 5 wird die mit der Geschwindigkeitsmesseinrichtung 3 ermittelte Geschwindigkeit mit einem Schwellwert verglichen. Abhängig von diesem Vergleich steuert die Steuereinheit 5 eine Stelleinheit zur Höhenverstellung des Sattels 4 an.

Der Schwellwert kann über die Eingabeeinheit eingestellt werden. Die Anzeigeeinheit dient zur Visualisierung des Schwellwerts.

Die Stelleinheit umfasst ein von der Steuereinheit 5 gesteuertes Getriebe 9, einen Hebel 10 und einen Bowdenzug 11. Weiterhin umfasst die Stelleinheit ein Betätigungselement in Form eines ein Ventil 6 aufweisenden Pneumatikzylinders 7 im Bereich eines den Sattel 4 tragenden Stützrohrs 8. Anstelle eines Ventils 6 kann vorteilhaft eine Anordnung mit mehreren Ventilen vorgesehen sein. Als unterstützende Elemente sind ein Magnet 12 und eine Strahlfeder 13 vorgesehen. Dem Pneumatikzylinder 7 ist ein Druckbehälter 19 zugeordnet.

Mit der so ausgebildeten Stelleinheit und der zugeordneten Steuereinheit 5 ist eine selbsttätige, geschwindigkeitsabhängige Höhenverstellung des Sattels 4 möglich.

Für eine zusätzliche manuell betätigbare Höhenverstellung des Sattels 4 ist ein weiterer Hebel 14 am Lenker 15 des Fahrrads 2 vorgesehen.

Schließlich zeigen die Figuren 2 und 3 eine Zuleitung 20 zu einem nicht gesondert dargestellten Akkumulator, der eine autarke Energieversorgung für die erfindungsgemäße Vorrichtung bildet.

Die Funktion der erfindungsgemäßen Vorrichtung ist derart, dass dann, wenn die mit der Geschwindigkeitsmesseinrichtung 3 erfasste Geschwindigkeit den in der Steuereinheit 5 vorgegebenen Schwellwert unterschreitet, der Sattel 4 aus einer Fahrposition in eine Ruheposition mittels der Stelleinheit abgesenkt wird. In der Fahrposition ist die Sattelposition so eingestellt, dass der Fahrer auf dem Sattel 4 sitzend bequem die Pedale des Fahrrads 2 erreicht. In der Ruheposition ist die Sattelposition so eingestellt, dass der Fahrer auf dem Sattel 4 sitzend mit den Füßen den Boden erreicht und so das stehende Fahrrad 2 ohne Schrägstellen halten kann.

Die Absenkung des Sattels 4 erfolgt dadurch, dass die Steuereinheit 5 das Getriebe 9 in Gang setzt, wodurch über den Bowdenzug 11, unterstützt durch den Magnet 12 und die Stahlfeder 13 der Hebel 10 betätigt wird, und dadurch das Ventil 6 so angesteuert wird, dass Druckluft aus dem Pneumatikzylinder 7 ausströmen kann. Über den Pneumatikzylinder 7 wird dadurch der Sattel in die Ruheposition abgesenkt.

Nach einem darauffolgenden Anfahren kann der Fahrer selbsttätig durch Betätigen des Hebels 14 am Lenker 15 den Sattel 4 wieder in die Fahrposition anheben. Alternativ oder zusätzlich kann das Anheben des Sattels 4 selbsttätig über die erfindungsgemäße Vorrichtung erfolgen, in dem die Steuereinheit 5 das Betätigungselement entsprechend ansteuert, wenn die mit der Geschwindigkeitsmesseinrichtung 3 erfasst Geschwindigkeit den Schwellwert überschreitet. Dann wird über die Stelleinheit das Ventil 6 so angesteuert, dass Druckluft in den Pneumatikzylinder 7 einströmt und der Sattel 4 mittels des Pneumatikzylinders 7 angehoben wird.

### Bezugszeichenliste

- (1): Rahmen
- (2): Fahrrad
- (3): Geschwindigkeitsmesseinrichtung
- (4): Sattel
- (5): Steuereinheit
- (6): Ventil
- (7): Pneumatikzylinder
- (8): Stützrohr
- (9): Getriebe
- (10): Hebel
- (11): Bowdenzug
- (12): Magnet
- (13): Stahlfeder
- (14): Hebel
- (15): Lenker
- (16): Gehäuse
- (17): Rolle
- (18): Rad
- (19): Druckbehälter
- (20): Akku-Anschluss

## Patentansprüche

1. Vorrichtung zur Einstellung wenigstens einer Fahrzeugfunktion eines Zweiradfahrzeugs, mit einer Geschwindigkeitsmesseinrichtung (3), mittels derer die Geschwindigkeit des Zweiradfahrzeugs erfasst wird, und mit einer Stelleinheit, mittels derer in Abhängigkeit der Geschwindigkeit des Zweiradfahrzeugs die Stellung eines Sitzes des Zweiradfahrzeugs selbsttätig eingestellt wird.

2. Vorrichtung nach Anspruch 1, **dadurch gekennzeichnet, dass** mittels der Stelleinheit eine Höhenverstellung des Sitzes erfolgt.

3. Vorrichtung nach Anspruch 2, **dadurch gekennzeichnet, dass** bei Absinken der Geschwindigkeit des Zweiradfahrzeugs unter einen Schwellwert der Sitz mittels der Stelleinheit in eine Ruheposition überführt wird.

4. Vorrichtung nach Anspruch 3, **dadurch gekennzeichnet, dass** die Sitzhöhe des Sitzes in der Ruheposition kleiner ist als in einer Fahrposition, die bei Geschwindigkeiten oberhalb des Schwellwerts mittels der Stelleinheit eingestellt ist.

5. Vorrichtung nach einem der Ansprüche 1 oder 2, **dadurch gekennzeichnet, dass** durch mehrere Schwellwerte mehrere Geschwindigkeitsbereiche definiert sind, wobei für jeden Geschwindigkeitsbereich mit der Stelleinheit eine bestimmte Stellung des Sitzes eingestellt wird.

6. Vorrichtung nach einem der Ansprüche 1 bis 5, **dadurch gekennzeichnet, dass** die Stelleinheit eine elektronische Steuereinheit (5) mit einer Rechnereinheit und ein Betätigungselement aufweist, wobei in der Rechnereinheit die mit der Geschwindigkeitsmesseinrichtung (3) erfasste Geschwindigkeit mit wenigstens einem Schwellwert verglichen wird und die Steuereinheit (5) in Abhängigkeit hiervon das Betätigungselement ansteuert, mittels dessen die Stellung des Sitzes geändert wird.

7. Vorrichtung nach Anspruch 6, **dadurch gekennzeichnet, dass** die Steuereinheit (5) eine Anzeigeeinheit zur Anzeige eines Schwellwerts und eine Eingabeeinheit zur Vorgabe oder Änderung eines Schwellwerts aufweist.

8. Vorrichtung nach einem der Ansprüche 1 bis 5, **dadurch gekennzeichnet, dass** die Geschwindigkeitsmesseinrichtung (3) und die Stelleinheit in Form von mechanisch arbeitenden Einheiten ausgebildet sind.

9. Vorrichtung nach einem der Ansprüche 1 bis 8, **dadurch gekennzeichnet, dass** die Stelleinheit als Betätigungselement einen Gasdruckzylinder, einen Pneumatikzylinder, einen Hydraulikzylinder oder einen Elektromotor aufweist.

10. Vorrichtung nach Anspruch 9, **dadurch gekennzeichnet, dass** als Stellelement zur Betätigung des Betätigungselements ein Schalter, ein Hebel (10) und und/oder ein Bowdenzug (11) vorgesehen ist.

11. Vorrichtung nach Anspruch 9, **dadurch gekennzeichnet, dass** das Betätigungselement über von der Steuereinheit (5) generierte Steuersignale betätigbar ist, welche von der Steuereinheit (5) an das Betätigungselement leitungsgebunden oder berührungslos gesendet werden.

12. Vorrichtung nach einem der Ansprüche 1 bis 11, **dadurch gekennzeichnet, dass** mit dieser eine Gangschaltung des Zweiradfahrzeugs betätigt wird.

13. Vorrichtung nach einem der Ansprüche 1 bis 12, **dadurch gekennzeichnet, dass** mit dieser ein Antriebsmotor des Zweiradfahrzeugs betätigt wird.

14. Vorrichtung nach einem der Ansprüche 13 oder 14, **dadurch gekennzeichnet, dass** bei Absinken der Geschwindigkeit des Zweiradfahrzeugs unterhalb einen Schwellwert ein für einen Anfahrvorgang geeigneter Gang eingelegt und/oder der Antriebsmotor abgeschaltet wird.

15. Vorrichtung nach einem der Ansprüche 1 bis 14, **dadurch gekennzeichnet, dass** diese eine nachrüstbare Einheit bildet.
